# EUROPEAN PATENT SPECIFICATION

(11) **EP 4 373 363 B1**
(45) Date of publication and mention of the grant of the patent: **03.09.2025**
(21) Application number: 22747754.4
(22) Date of filing: 06.07.2022
(51) Int. Cl.: A47J 31/46

(54) **MACHINE FOR DISPENSING AN INFUSION BEVERAGE**
MASCHINE ZUR AUSGABE EINES INFUSIONSGETRÄNKS
MACHINE DE DISTRIBUTION DE BOISSON INFUSÉE

(30) Priority: 23.07.2021 IT 202100019733
(43) Date of publication of application: 29.05.2024
(73) Proprietor: LELIT S.R.L., 25045 Castegnato (Brescia) (IT)
(72) Inventor: EPIS, Mauro, 25045 Castegnato, Brescia (IT)
(74) Representative: Chimini, Francesco
(86) International application number: PCT/IB2022/056242
(87) International publication number: WO 2023/002284

(56) References cited:
- EP-B1- 2 991 530
- EP-B1- 3 273 830

## Description

The present invention relates to a machine for dispensing an infusion beverage, such as coffee, chamomile tea, tea, or herbal tea.

In the state of the art, machines for dispensing infusion beverages are equipped with complex systems to regulate the pressure of the infusion fluid.

In particular, most coffee makers are equipped with a dynamic brewing pressure regulation system that consists of three elements, namely, a proportional valve, a control board, and a pressure transducer.

The proportional valve allows the pressure of the infusion fluid to be varied in such a way that an input variation at the valve is directly proportional to the output variation. In other words, the ratio of inlet pressure to outlet pressure is kept constant.

The control board is equipped with a CPU unit integrated on the board itself and enables a closed-loop control over the hydraulic circuit of the infusion fluid.

Finally, the pressure transducer detects the pressure value of the infusion fluid.

The operation of the dynamic brewing pressure regulation system provides for a pump feeding the proportional valve with the infusion fluid. Downstream of the valve, the transducer that detects the pressure value and sends this value to the control board is placed. The control board, depending on the value received from the transducer, changes the pressure of the infusion fluid entering the proportional valve.

The combination of the three elements (valve, transducer, and control board) makes it possible to vary the dispensing pressure quickly and accurately.

Disadvantageously, the dynamic pressure regulation system is expensive, as it requires feedback control.

An additional disadvantage stems from the fact that the system is bulky, because in addition to the valve, the transducer and the control board are also necessary; moreover, the control board also deals with high and low voltage management.

A machine for dispensing an infusion beverage according to the preamble of claim 1 is known from EP2991530.

The object of the present invention is to propose a machine for dispensing an infusion beverage that is able to at least partially solve the drawbacks described above. In particular, it is the object of the present invention to obtain a system for controlling the dispensing pressure that is economical and compact.

Said object is achieved with a machine for dispensing an infusion beverage according to claim 1. The dependent claims describe preferred embodiments of the invention.

The features and the advantages of the machine for dispensing an infusion beverage according to the invention shall be made readily apparent from the following description of preferred examples of embodiments thereof, provided purely by way of a nonlimiting example, with reference to the accompanying figures, wherein:
- Fig. 1 is a perspective sectional view of a flow adjustment solenoid valve in one embodiment;
- Fig. 2 is a perspective view of the detail II highlighted in Fig. 1;
- Fig. 3 is a front view of the flow adjustment solenoid valve in Fig. 1 in a complete opening configuration;
- Fig. 3a is a front view of the flow adjustment solenoid valve in Fig. 1 in an intermediate opening configuration;
- Fig. 3b is a front view of the flow adjustment solenoid valve in Fig. 1 in a closing configuration;
- Fig. 4 is a perspective view in separate components of the flow adjustment solenoid valve in Fig. 1;
- Fig. 5 is a front view of a further embodiment of the flow adjustment solenoid valve in a complete opening configuration;
- Fig. 6 is a perspective view of an even further embodiment of the flow adjustment solenoid valve in a closing configuration;
- Fig. 6a is a front view of the flow adjustment solenoid valve in Fig. 6 in an intermediate opening configuration;
- Fig. 6b is a front view of the flow adjustment solenoid valve in Fig. 6 in a closing configuration;

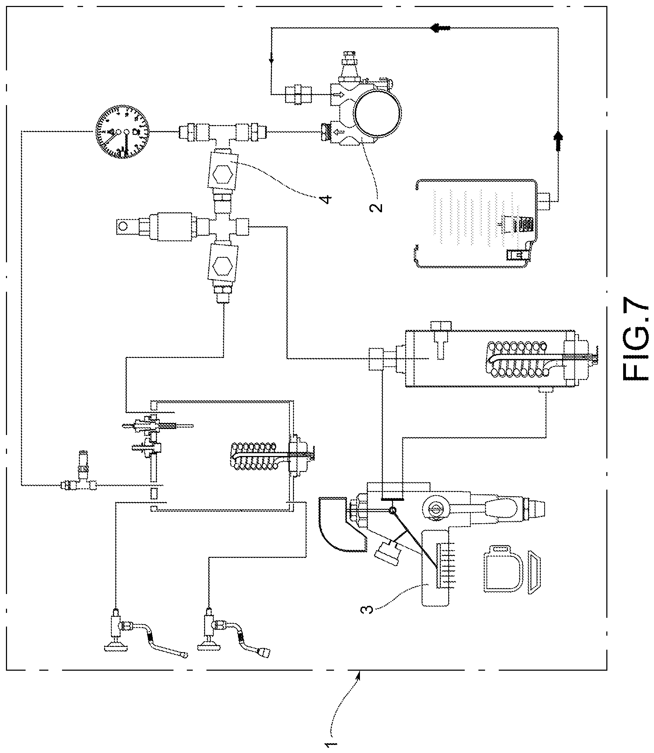

- Fig. 7 is a diagram of a machine for dispensing an infusion beverage;
- Fig. 8 is a front view of a different embodiment of the flow adjustment solenoid valve in a closing configuration, and
- Fig. 8a is a perspective view of the embodiment in Fig. 8.

In the following description, elements common to the various embodiments represented in the drawings are indicated with the same reference numerals.

In said drawings, 1 is used to denote a machine for dispensing an infusion beverage according to the invention as a whole.

In a general embodiment, the machine 1 is suitable for dispensing an infusion beverage, such as coffee, chamomile tea, tea, or herbal tea. Said machine 1 comprises a pump group 2, a dispensing group 3 and a flow adjustment solenoid valve 4.

For example, the pump group 2 is a rotary pump, commonly used in coffee machines, and is suitable for pumping an infusion fluid. For example, the infusion fluid is water, or milk, an alcoholic beverage, or a combination thereof.

The dispensing group 3 is arranged downstream of the pump group 2 and is fluidly connected thereto. Moreover, the dispensing group 3 comprises a filtration member suitable for containing an organic substance wettable by the infusion fluid so as to obtain the corresponding infusion beverage to be dispensed. In particular, the filtration member is a filter holder that comprises within it a filter where the coffee is added.

The flow adjustment solenoid valve 4 extends along a valve axis V and is fluidly interposed between the pump group 2 and the dispensing group 3 so as to control the flow rate of the infusion fluid.

Preferably, the flow adjustment solenoid valve 4 adjusts the pressure and/or speed of the infusion fluid to function as a flow regulator.

The flow adjustment solenoid valve 4 further comprises a shutter 40 movable along the valve axis V.

Said solenoid valve is configurable in a closing configuration, in which the pump group 2 is inactive and the shutter 40 occludes the passage of the infusion fluid from the pump group 2 to the dispensing group 3, and in a complete opening configuration, in which the pump group is operational and the shutter 40 is fully raised so that the infusion fluid may reach the dispensing group.

According to the present invention, the flow adjustment solenoid valve 4 comprises flow adjustment means 5 suitable for regulating the passage of the infusion fluid.

According to one aspect of the invention, between the closing configuration and the complete opening configuration, the flow adjustment solenoid valve 4 is arranged in an intermediate opening configuration, where the pump group 2 is operational and the flow adjustment means 5 allow partial lifting of the shutter 40 so as to partialize the flow rate of the infusion fluid from the pump group to the dispensing group.

Preferably, the flow adjustment means 5 are fully integrated into the flow adjustment solenoid valve 4.

Advantageously, the regulation of the infusion fluid flow rate is only possible by the flow adjustment solenoid valve that regulate the pressure and/or the speed of the infusion fluid. Therefore, the machine is compact, as no additional elements, such as the pressure transducer or the control board, are needed.

Preferably, the flow adjustment means 5 are either fully mechanical or are electronically controlled mechanical means, such as controlled by a computer program. In other words, the flow adjustment means 5 are not fully electronic and are not configured as a closing-loop control.

When the flow adjustment solenoid valve 4 is in the intermediate opening configuration, the machine 1 operates under "low flow" conditions, that is, with low infusion fluid flow rate values. For example, in the intermediate opening configuration, the infusion fluid pressure is in the range of 2 to 7 bar. The intermediate opening configuration is extremely useful during the steps of "blooming," pre-infusion and at the end of dispensing. It is well known to the person skilled in the art that the step of "blooming" or "flowering" is the step in which the organic substance in the filtration member is initially wetted by the infusion fluid. The pre-infusion stage precedes beverage dispensing and is the stage in which the infusion fluid fills the filtration member by wetting the organic matter completely. Finally, during the end stage of brewing, the final extraction from the organic matter occurs, so that the beverage is lengthened.

On the other hand, when the flow adjustment solenoid valve 4 is in the complete opening configuration, the machine 1 operates under "full flow" conditions, i.e., with high flow rate values of the infusion fluid. For example, in the complete opening configuration, the pressure of the infusion fluid is between 8 to 14 bar. It is known to the person skilled in the art that the stage of dispensing the infusion beverage through dispensing group 3 occurs under "full flow" conditions, i.e., when the flow adjustment solenoid valve 4 is in a complete opening configuration.

In one embodiment, the flow adjustment solenoid valve comprises a valve body 41 delimiting an inlet chamber 410, a flow adjustment chamber 413, and an outlet chamber 415.

The inlet chamber 410 is connectable to the pump group 2; in the flow adjustment chamber 413 the shutter 40 is translatable, and the outlet chamber 415 is connectable to dispensing group 3.

Said inlet 410, flow adjustment 413, and outlet 415 chambers are arranged in succession and fluidly connected to each other.

According to one embodiment, the flow adjustment solenoid valve 4 also comprises a tubular element 42, a first core 43, and a piston 44.

The tubular element 42 is engaged to the valve body 41, and the first core 43 is operatively connected to the tubular element 42.

Preferably, the first core 43 is integral to the tubular element 42, e.g., it is connected by welding.

The piston 44 comprises the shutter 40 and extends between a head end 44' and a tail end 44". Said piston 44 is at least partially housed inside the tubular element 42, so that it is guided by the tubular element in the translation between the closing configuration and the complete opening configuration.

Preferably, the valve body 41, the tubular element 42, and the first core 43 delimit a piston translation chamber 414 where the piston 44 is at least partially slidingly housed. Said piston translation chamber 414 faces the flow adjustment chamber 413 and is fluidly connected thereto.

In one embodiment, the piston 44 also comprises a second core 440, a thrust pad 442, a spacer 443 and a second elastic element 445.

The second core 440 internally has a hole 441 that forms, at the head end 44', a shutter chamber 4410 where the shutter is at least partially housed.

The thrust pad 442 is in contact with the shutter 40, whereas the spacer 443 is placed in a seat 444 obtained in the hole 441.

The second elastic element 445 is precompressed and is interposed between the thrust pad 442 and the spacer 443 so as to elastically connect them together, keep the thrust pad 442 abutting against the shutter 40, and keep the spacer 443 in its respective seat 444.

Said thrust pad 442, second elastic element 445 and spacer 443 are housed in axial succession, i.e., along the valve axis V, within the hole 441.

According to one embodiment, the valve body 41 comprises an annular wall 410' that delimits the flow adjustment chamber 413.

Moreover, the tubular element 42 comprises an annular portion 420 that is engaged to the annular wall 410' with shape and/or interference coupling, for example by threaded connection. This annular portion 420 is delimited axially by an abutting undercut 421 that forms a step.

A flange 446 is obtained at the head end 44', which protrudes radially outward.

Flow adjustment means 5 comprise a first elastic element 55 fitted externally on the piston 44, preferably at the head end 44'. Such first elastic element 55 is positioned between the abutting undercut 421 and the flange 446, so that the elasticity of the first elastic element 55 allows the flow adjustment solenoid valve 4 to arrange itself in the intermediate opening configuration.

In particular, in the intermediate opening configuration, the pump group 2 is operational, and the elasticity of the first elastic element 55 allows the partial lifting of the shutter 40 so as to partialize the flow rate of the infusion fluid from the pump group 2 to the dispensing group 3.

Preferably, the tubular element 42 is removably engaged to the valve body 41. For example, in the case of a threaded connection between the tubular element 42 and the valve body 41, it is possible to screw the annular portion 420 into the annular wall 410' so as to reduce the volume of the flow adjustment chamber 413 and increase the pre-compression of the first elastic element 55, or it is possible to unscrew the annular portion 420 from the annular wall 410' so as to disassemble the flow adjustment solenoid valve 4 and replace the first elastic element 55.

According to one embodiment, the first elastic element 55 is a coil spring that operates under loads between 250 and 950 grams.

Preferably, when the flow adjustment solenoid valve 4 is in the closing configuration, the first elastic element 55 is precompressed.

In particular, the elastic constant of the first elastic element 55 is lower than the elastic constant of the second elastic element 445. In other words, the second elastic element 445 is stiffer than the first elastic element 55.

Advantageously, the first elastic element is easily replaceable in case its stiffness needs to be increased or reduced or in case of breakage. In addition, due to the ease with which the flow adjustment solenoid valve may be disassembled, an operator may easily separate the tubular element from the valve body and replace the first elastic element.

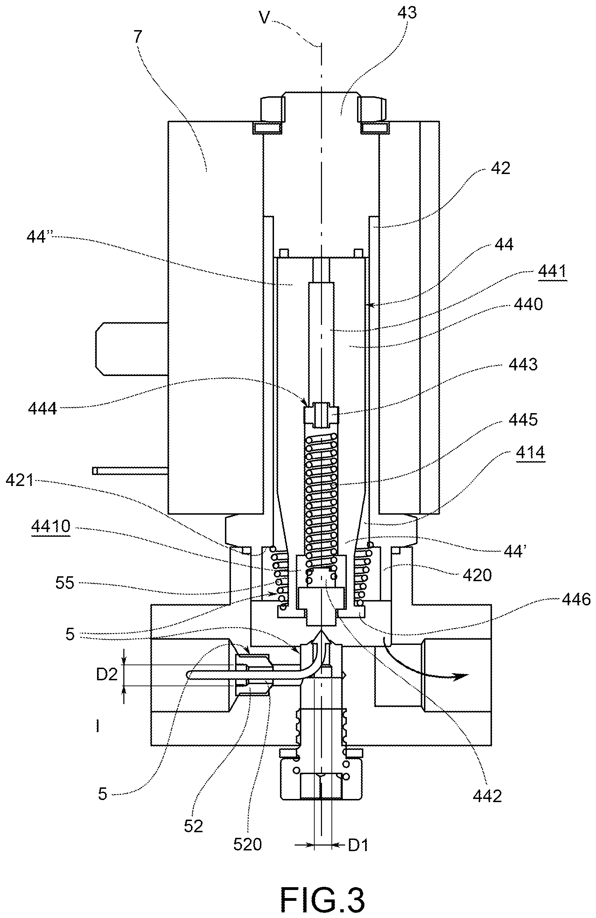

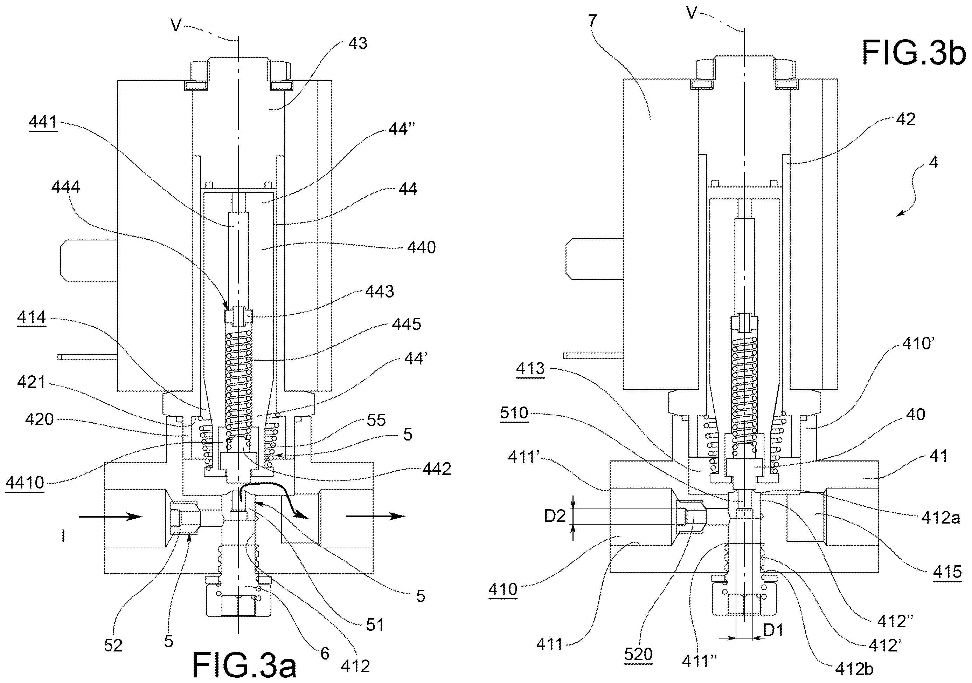

According to one embodiment shown in the attached Fig. 3-3b, the flow adjustment means 5 also comprise a first insert 51 that is removably engageable within the inlet chamber 410. The insert has a first through-hole 510 for the passage of the infusion fluid.

This first through-hole 510 is occluded by the shutter 40 in the closing configuration and is defined by a first hole diameter D1 suitable for allowing the flow of the infusion fluid to lift the shutter and move it from the closing configuration to the intermediate opening configuration.

In other words, through the length of the first hole diameter, it is possible to obtain the desired pressure and velocity values of the infusion fluid, so that the obtained flow is able to lift the shutter and arrange the flow adjustment solenoid valve in the intermediate opening configuration.

According to one embodiment, the inlet chamber 410 comprises an access opening 412b facing outwards from the valve body 41 and suitable for allowing the adjustment of the axial position of the first insert 51 along the inlet chamber 410 and/or the replacement of the first insert 51 without disassembling the flow adjustment solenoid valve 4.

Advantageously, the first insert may be accessed through the access opening so that its position along the valve axis may be regulated. By moving the first insert toward the shutter, the pre-compression of the first elastic element may be increased. Conversely, moving the first insert axially away from the shutter reduces the pre-compression of the first elastic element in the closing configuration. In particular, by controlling the pre-compression of the first elastic element, a micro-adjustment of the flow of the infusion fluid may be achieved, as increasing the pre-compression results in greater resistance to the passage of the infusion fluid, which leads to a change in the pressure and velocity of the infusion fluid.

In the present case, moving the first insert toward the shutter and thus increasing the pre-compression of the first elastic element increases the resistance to the passage of the infusion fluid and decreases the fluid pressure, for example, the pressure is less than 4 bar. Conversely, moving the first insert away from the shutter and thus reducing the pre-compression of the first elastic element decreases the resistance to the passage of the infusion fluid and increases the fluid pressure, e.g., the pressure is above 4 bar.

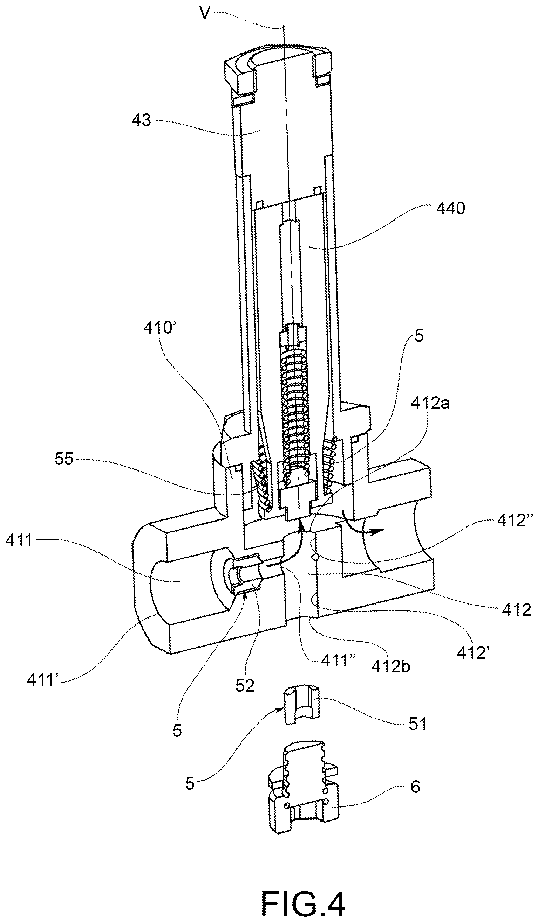

As also shown in Fig. 4, the access opening also allows the first insert to be replaced in the case of breakage or if a first insert with a different length of the first hole diameter is desired.

Advantageously, by choosing the first insert with the desired length of the first hole diameter, it is possible to obtain certain pressure and speed values of the infusion fluid, so that the obtained flow is able to lift the shutter and arrange the flow adjustment solenoid valve in the intermediate opening configuration.

In other words, by appropriately choosing the first insert, a flow macro-adjustment may be achieved, because through the length of the first hole diameter, the desired pressure and speed values of the infusion fluid may be obtained.

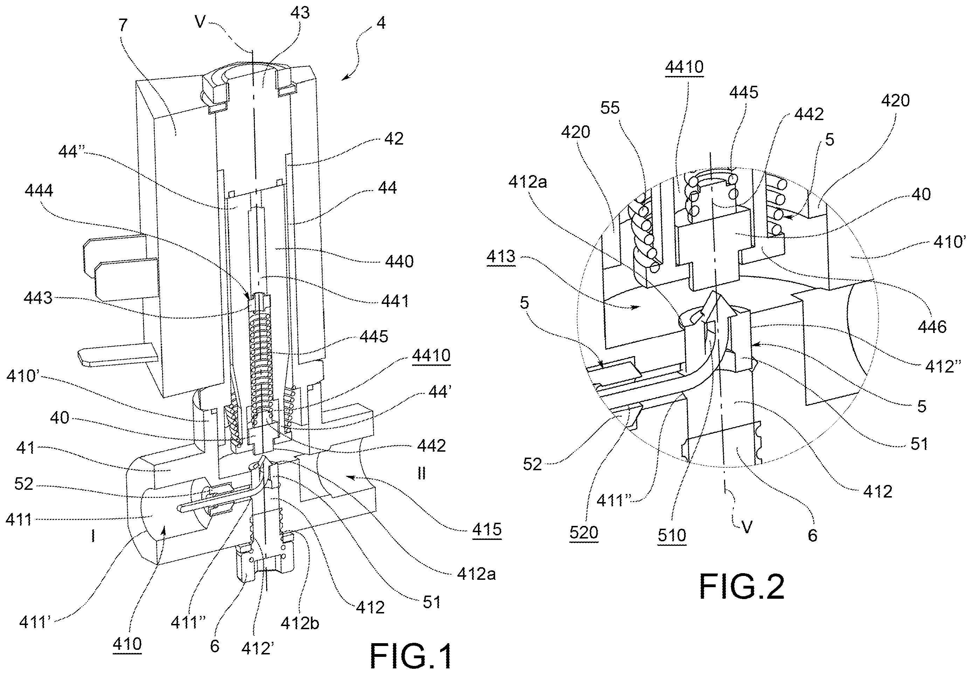

According to an example embodiment shown in Fig. 1, the flow adjustment solenoid valve 4 comprises a cap 6 to removably close the access opening 412b.

By removing the cap 6, it is possible to access the first insert 51 and regulate its axial position (flow micro-adjustment) or replace it (flow macro-adjustment).

In one embodiment, the inlet chamber 410 is defined by a first pipe 411 extending along a fluid inlet axis I, and a second pipe 412 extending along the valve axis V.

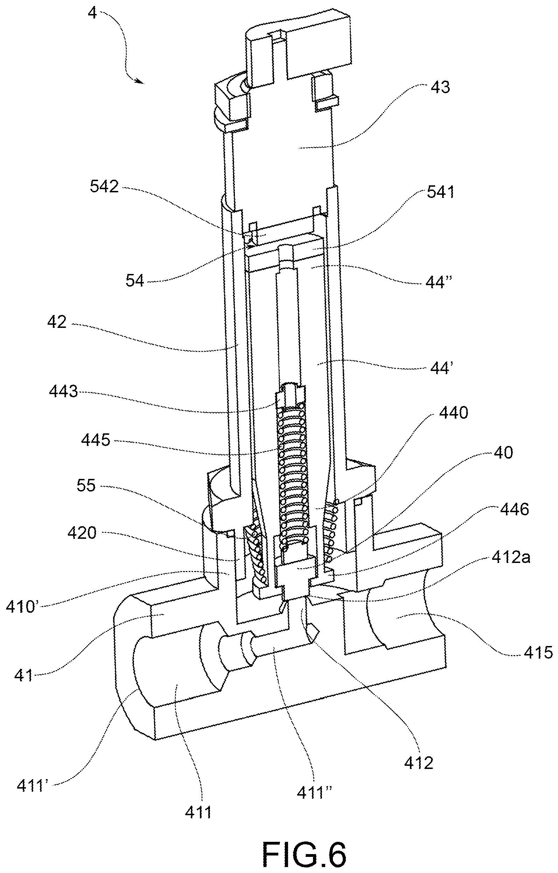

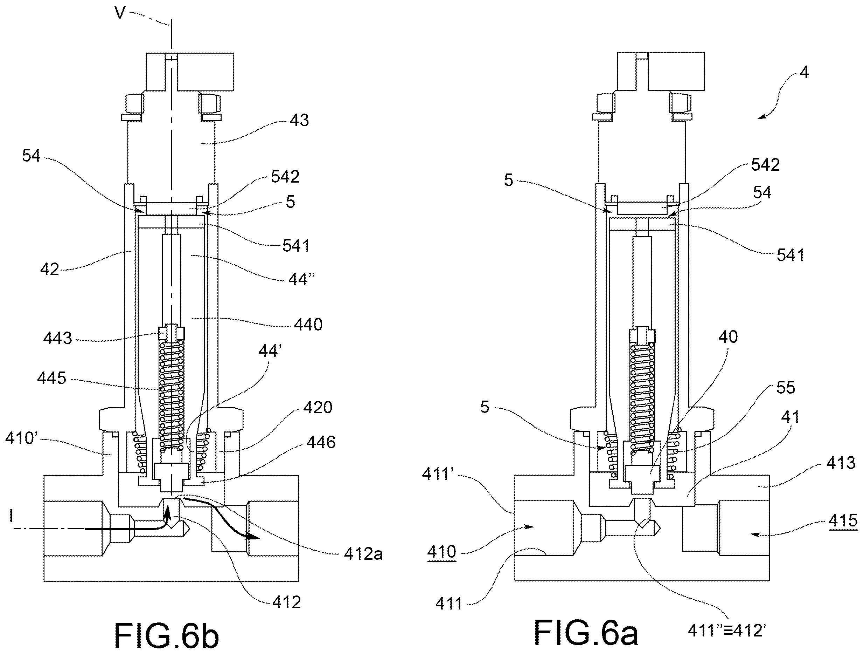

The valve axis V is incident to the fluid inlet axis I. Preferably, the valve axis V is orthogonal to the fluid inlet axis I so as to form an inlet chamber 410 substantially in the shape of a T (Fig. 4) or L (Fig. 6a).

The first pipe 411 has an inlet mouth 411' suitable for receiving the infusion fluid pumped by the pump group 2, and a connection mouth 411" for connection with the second pipe 412.

The second pipe 412 extends between a first end 412' and a second end 412" opposite the first, where that second end 412" has an opening 412a facing the flow adjustment chamber 413 and suitable for being occluded by the shutter 40 in the closing configuration.

Preferably, the connection mouth 411" flows into an intermediate portion of the second pipe 412, i.e., between the first 412' and the second end 412". Alternatively, the connection mouth 411" opens at the first end 412' (Fig. 6a).

According to one embodiment, the access opening 412b delimits axially the first end 412', and, at the second end 412", the first insert 51 is placed. In particular, the first insert 51 is placed at the opening 412a.

In one embodiment, the flow adjustment means 5 also comprise a second insert 52 removably engageable inside the inlet chamber 410 so that it may be replaced without disassembling the flow adjustment solenoid valve 4. Preferably, the second insert 52 is arranged inside the first pipe 411 in the vicinity of the connection mouth 411".

Said second insert 52 has a second through-hole 520 for the passage of the infusion fluid, and said second through-hole 520 is defined by a diameter D2 that allows the regulation of the pressure and speed of the infusion fluid.

In detail, the first pipe 411 exhibits at least one taper proceeding axially along the fluid inlet axis I from the inlet mouth 411' to the connection mouth 411". Such taper defines a second seat in which to house the second insert 52, for example, by shape and/or force coupling, or by threaded connection.

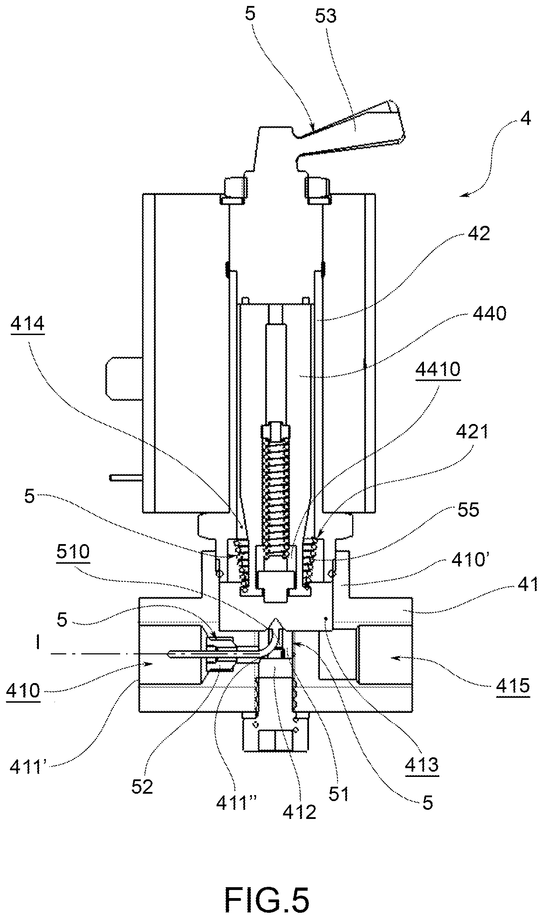

According to an embodiment illustrated in Fig. 5, the flow adjustment means 5 also comprise an upper flow adjustment member 53, such as a lever or a handle, integral to the first core 43. By actuating the upper flow adjustment member 53, the first core 43 moves along the valve axis V and moves the tubular element 42, so that the annular portion 420 of the tubular element 42 engages the annular wall 410' of the valve body 41 more deeply, causing an increase in the pre-compression of the first elastic element 55.

For example, by rotating the handle, the rotation is transferred from the first core 43 to the tubular element 42, the annular portion 420 of which screws deeper into the annular wall 410' of the valve body 41.

Advantageously, screwing the annular portion into the annular wall reduces the volume of the flow adjustment chamber and increases the pre-compression of the first elastic element. Said pre-compression defines the force with which the shutter occludes the infusion fluid passage and enables a micro-adjustment of the flow, because it allows the pressure and speed of the infusion fluid to be adjusted when the flow adjustment solenoid valve is in the intermediate opening configuration.

According to one embodiment illustrated in the attached Fig. 6-6b, the flow adjustment means 5 comprise a pair of programmable magnets 54, where a first magnet 541 of said pair of programmable magnets 54 is fixed to the tail end 44", and a second magnet 542 of said pair of programmable magnets 54 is fixed and made integral to the first core 43 so as to be facing the first magnet 541. The flow adjustment solenoid valve 4 is powered by an electric motor that controls the rotation about the valve axis V of the first core 43.

The rotation of the first core 43 is then transferred to the second magnet 542, which rotates by a predefined first angle, so as to achieve angular alignment along the valve axis V between the first 541 and the second magnet 542. Said angular alignment along the valve axis V allows the pair of programmable magnets 54 to behave like a spring and thus allows the flow adjustment solenoid valve 4 to arrange itself in an intermediate opening configuration.

For the purpose of this discussion, the term "programmable magnet" or "correlated magnet," or even simply "polymagnet" refers to a magnetic structure comprising a plurality of magnets of alternating polarity and variously arranged on a plane. By virtue of said plurality of magnets, extremely complex magnetic fields may be generated, and bringing a pair of programmable magnets closer together may result in different behaviors depending on how the polarities of the magnets that make up each programmable magnet are arranged.

In particular, programmable magnets have been the subject of a plurality of patents filed under the name "Correlated Magnetics Research," including US7839247B2, US8179219B2 and US8279031B2.

In the present case, considering a pair of programmable magnets facing each other and rotating the first magnet with respect to the second magnet, i.e., changing the axial angular alignment between the two magnets, three different responses may occur: attraction, rejecting and "spring" behavior.

In "spring" behavior, the two magnets stand at an equilibrium distance, and bringing them closer together it generates rejecting forces that tend to bring them back to the equilibrium distance. On the contrary, moving them away from each other creates attractive forces that tend to bring them back to the equilibrium distance.

In the embodiment shown in Fig. 6a, the first 541 and second 542 magnets are observed at the equilibrium distance, i.e., angularly aligned along the valve axis V so as to exhibit "spring" behavior.

Advantageously, through the planar arrangement of the plurality of magnets with alternating polarity that makes up each programmable magnet, it is possible to choose the pair of programmable magnets that exhibits the desired equilibrium distance. Specifically, at the equilibrium distance, the flow adjustment solenoid valve is arranged in the intermediate opening configuration, and by choosing the appropriate equilibrium distance, the desired flow of infusion fluid may be achieved.

According to an embodiment shown in Fig. 6b, the second magnet 542 rotates by a second predefined angle so as to achieve an angular alignment along the valve axis V between the first 541 and the second 542 magnet such that the pair of programmable magnets 54 may attract each other and arrange the flow adjustment solenoid valve 4 in a complete opening configuration. In other words, when the second magnet 542 rotates by an amplitude equal to that of the second predefined angle, the axial angular alignment of the pair of programmable magnets results in an attraction behavior between the first and second magnets.

In the embodiment shown in Fig. 6, the second magnet 542 rotates by a predefined third angle so as to obtain an angular alignment along the valve axis V between the first 541 and the second 542 magnet such that the pair of programmable magnets 54 may repel each other and arrange the flow adjustment solenoid valve 4 into a closing configuration. In other words, when the second magnet 542 rotates by an amplitude equal to that of the predefined third angle, the axial angular alignment of the pair of programmable magnets results in rejecting behavior between the first and second magnets.

Specifically, the flow adjustment means 5 comprise the first elastic element 55 and/or the first insert 51 and/or the second insert 52 and/or the upper flow adjustment member 53 and/or the pair of programmable magnets 54. The flow adjustment means 5 are suitable for regulating the flow of infusion fluid from the pump group 2 to the dispensing group 3 when the flow adjustment solenoid valve 4 is in the intermediate opening configuration.

Preferably, the flow adjustment solenoid valve 4 also comprises a coil 7 that, when current flows through it, generates a magnetic field that lifts the piston 44 due to the presence of the second core 440 that is made of a ferrous material. By lifting the piston 44, the flow adjustment solenoid valve 4 is arranged in the complete opening configuration.

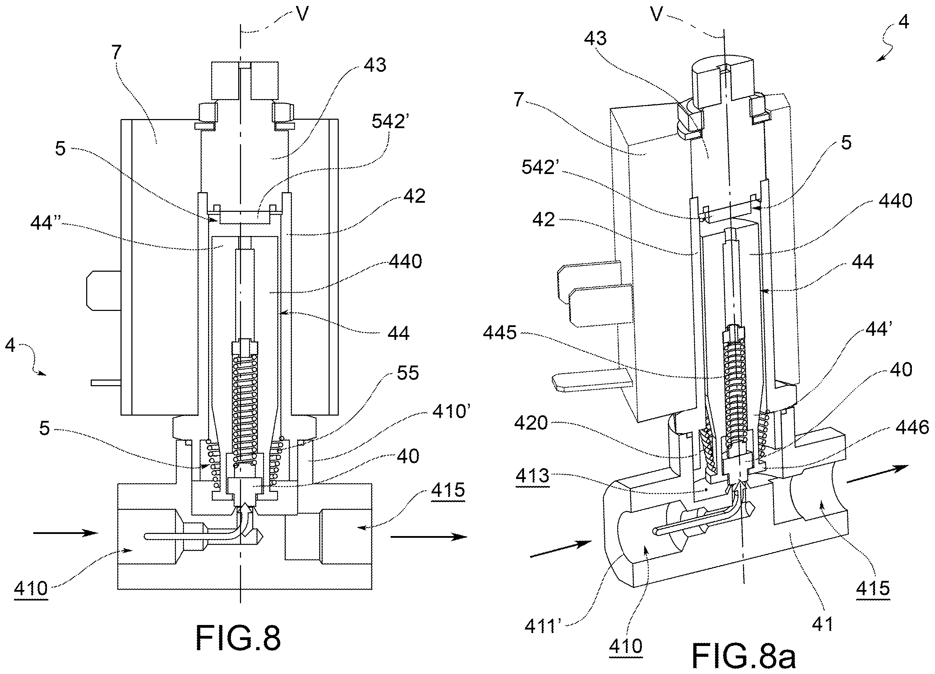

According to a different embodiment shown in the attached Fig. 8, the piston 44 is at least partially a permanent magnet and the flow adjustment means 5 also comprise a permanent micro-adjustment magnet 542' that is fixed and made integral to the first core 43. Said permanent micro-adjustment magnet 542' is facing the piston 44, such that the facing polarities of the permanent micro-adjustment magnet 542' and of the piston 44 are coincident.

Since the polarity of the permanent micro-adjustment magnet 542' is facing and coincident with the polarity of the piston 44, a rejecting force is generated on the piston 44, which, as it moves away from the first core 43, results in an increase of the force with which the shutter 40 occludes the passage of the infusion fluid.

With the flow adjustment solenoid valve 4 in the intermediate opening configuration, the higher the rejecting force the lower the infusion fluid flow rate. In fact, considering that the pressure of the infusion fluid determines the lifting of the shutter, the higher the rejecting force, the less the shutter 40 may be lifted; conversely, the lower the rejecting force, the more the shutter 40 may be lifted.

To reduce the rejecting force, the first core 43 may be moved along the valve axis V, so that the permanent micro-adjustment magnet 542' is moved away from the piston 44.

Advantageously, by adjusting the rejecting force between the permanent micro-adjustment magnet 542' and the piston 44, a micro-adjustment of the flow of the infusion fluid may be achieved. Specifically, increasing the rejecting force results in greater resistance to the passage of the infusion fluid, which leads to a change in the pressure and the velocity of the infusion fluid. Conversely, reducing the rejecting force also the resistance to the passage of the infusion fluid decreases.

It will appear obvious to the person skilled in the art that, in order to arrange the flow adjustment solenoid valve 4 in the complete opening configuration, the current must flow through the coil 7 so as to generate a magnetic field so as to overcome the rejecting force and lift the piston 44.

Preferably, the piston 44 comprises the second core 440 which is a permanent magnet.

According to the attached figures, the directional arrows shown indicate the flow direction of the infusion fluid.

Innovatively, the infusion beverage dispensing machine achieves the intended object, as it allows the dispensing pressure to be controlled by the flow adjustment solenoid valve alone.

Advantageously, the machine that is the subject of the present invention is extremely versatile, because in addition to the flow adjustment solenoid valve, the pressure and/or speed of the infusion fluid may also be regulated through the pump group. In other words, the synergic combination of the pump group with the flow adjustment solenoid valve allows the pressure of the infusion fluid to be varied while dispensing the infusion beverage.

According to an advantageous aspect, the machine that is the subject of the present invention is compact because the flow adjustment means are fully integrated into the flow adjustment solenoid valve. In other words, the control board and pressure transducer are not necessary to carry out the adjustment of the dispensing pressure.

According to an even further advantageous aspect, the machine that is the subject of the present invention allows operation under both "low flow" and "full flow" conditions, i.e., it allows adjustment of the flow rate of the infusion fluid during each phase of infusion of the organic substance (e.g., blooming, pre-infusion, dispensing, end of dispensing).

To the embodiments of the machine for dispensing an infusion beverage according to the present invention, a person skilled in the art, in order to meet contingent needs, may make changes, adaptations, and replacements of elements with others that are functionally equivalent without departing from the scope of protection of the following claims. Each of the features described as belonging to a possible embodiment may be obtained independently of the other described embodiments.

## Claims

1. A machine (1) for dispensing an infusion beverage, such as coffee, chamomile, tea, or herbal tea, comprising:
- a pump group (2), such as a rotary pump, suitable for pumping an infusion fluid;
- a dispensing group (3) arranged downstream of the pump group (2) and fluidly connected to it, said dispensing group (3) comprising a filtration member suitable for containing an organic substance wettable by the infusion fluid so as to obtain the corresponding infusion beverage to be dispensed;
- a flow regulation solenoid valve (4) extending along a valve axis (V) and which is fluidly interposed between the pump group (2) and the dispensing group (3) so as to control the flow of the infusion fluid, said flow adjustment solenoid valve (4) comprises a shutter (40) which is movable along the valve axis (V) and configurable in a closing configuration, in which the pump group (2) is inactive and the shutter (40) blocks the passage of the infusion fluid from the pump group (2) to the dispensing group (3), and in a complete opening configuration, in which the pump group operates and the shutter (40) is completely lifted so as to allow the infusion fluid to reach the dispensing group,
**Characterized by** the fact that the flow adjustment solenoid valve (4) comprises flow adjustment means (5) suitable for adjusting the passage of the infusion fluid, and wherein, between the closing configuration and the complete opening configuration, the flow adjustment solenoid valve (4) is arranged in an intermediate opening configuration, in which the pump group (2) operates and the flow adjustment means (5) allow the partial lifting of the shutter (40) so as to partialize the flow of the infusion fluid from the pump group to the dispensing group.

2. Machine (1) according to the preceding claim, wherein the flow adjustment solenoid valve (4) comprises a valve body (41) delimiting an inlet chamber (410) connectable to the pump group (2), a flow adjustment chamber (413) in which the shutter (40) is translatable, and an outlet chamber (415) connectable to the dispensing group (3), said inlet (410), flow adjustment (413) and outlet (415) chambers being arranged in a fluid sequence.

3. Machine according to the preceding claim, wherein the flow adjustment solenoid valve (4) further comprises:
- a tubular element (42) engaged with the valve body (41);
- a first core (43) operatively connected to the tubular element (42);
- a piston (44) comprising the shutter (40) and extending between a head end (44') and a tail end (44"), said piston (44) being at least partially housed inside the tubular element (42), so as to be guided by the tubular element in the translation between the closing configuration and the complete opening configuration.

4. Machine (1) according to the preceding claim, wherein:
- the valve body (41) comprises an annular wall (410') delimiting the flow adjustment chamber (413);
- the tubular element (42) comprises an annular portion (420) engaged with the annular wall (410') with shape and/or interference coupling, for example by means of a threaded connection, said annular portion (420) being axially delimited by an abutting undercut (421) forming a step;
- a flange (446) protruding radially outwards is obtained at the head end (44'),
and wherein the flow adjustment means (5) comprise a first elastic element (55) externally fitted onto the piston (44) and positioned between the abutting undercut (421) and the flange (446), so that the resilience of the first elastic element (55) allows the flow adjustment solenoid valve (4) to be arranged in the intermediate opening configuration.

5. Machine (1) according to the preceding claim, wherein the first elastic element (55) is a coil spring acting with loads between 250 and 950 g.

6. Machine (1) according to any one of claims 2 to 5, wherein the flow adjustment means (5) further comprise a first insert (51) which is removably engageable inside the inlet chamber (410) and carrying a first through hole (510) for the transit of the infusion fluid, said first through hole (510) being occluded by the shutter (40) in the closing configuration and being defined by a first hole diameter (D1) suitable for allowing the flow of the infusion fluid to lift the shutter and move it from the closing configuration to the intermediate opening configuration.

7. Machine (1) according to the preceding claim, wherein the inlet chamber (410) comprises an access opening (412b) facing the outside of the valve body (41) and suitable for allowing the axial position of the first insert (51) to be adjusted along the inlet chamber (410) and/or the first insert (51) to be replaced without disassembling the flow adjustment solenoid valve (4).

8. Machine (1) according to the preceding claim, wherein the flow adjustment solenoid valve (4) comprises a cap (6) for removably closing the access opening (412b).

9. Machine (1) according to any one of claims 2 to 8, wherein the inlet chamber (410) is defined by a first pipe (411) extending along a fluid inlet axis (I), and by a second pipe (412) extending along the valve axis (V) incident to the fluid inlet axis (I), preferably the valve axis (V) is orthogonal to the fluid inlet axis (I) so as to form a substantially "T"- or "L"-shaped inlet chamber (410), wherein
- the first pipe (411) has an inlet mouth (411') suitable for receiving the infusion fluid pumped by the pump group (2), and a connection mouth (411") for the connection with the second pipe (412), and
- the second pipe (412) extends between a first end (412') and a second end (412") opposite to the first, wherein said second end (412") has an opening (412a) facing the flow adjustment chamber (413) and suitable for being blocked by the shutter (40) in the closing configuration.

10. Machine (1) according to any one of claims 6 to 8 in combination with claim 9, wherein the access opening (412b) axially delimits the first end (412'), and the first insert (51) is positioned at the second end (412"), in particular at the opening (412a).

11. Machine according to any one of the preceding claims when dependent on claim 9, wherein the flow adjustment means (5) further comprise a second insert (52) which is removably engageable inside the inlet chamber (410) so as to be replaceable without disassembling the flow adjustment solenoid valve (4), preferably the second insert (52) is arranged inside the first pipe (411) close to the connection mouth (411"), said second insert (52) carrying a second through hole (520) for the transit of the infusion fluid, wherein said second through hole (520) is defined by a diameter (D2) which allows the pressure and speed of the infusion fluid to be adjusted.

12. Machine (1) according to any one of the preceding claims when dependent on claim 4, wherein the flow adjustment means (5) further comprise an upper flow adjustment member (53), such as a lever or a handle, which is integral with the first core (43) so that, by operating the upper flow adjustment member (53), the first core (43) moves along the valve axis (V) and moves the tubular element (42), the annular portion (420) of which engages the annular wall (410') of the valve body (41) more deeply, causing an increase in the pre-compression of the first elastic element (55).

13. Machine (1) according to any one of the preceding claims when dependent on claim 3, wherein the flow adjustment means (5) comprise a pair of programmable magnets (54), where a first magnet (541) of said pair of programmable magnets (54) is fixed to the tail end (44"), and a second magnet (542) of said pair of programmable magnets (54) is fixed to and made integral with the first core (43) so as to face the first magnet (541), the flow adjustment solenoid valve (4) being powered by an electric motor controlling the rotation about the valve axis (V) of the first core (43),
the rotation of the first core (43) being transferred to the second magnet (542), which rotates by a first predetermined angle, so as to obtain an angular alignment along the valve axis (V) between the first (541) and second (542) magnets such as to allow the pair of programmable magnets (54) to behave as a spring and therefore allow the flow adjustment solenoid valve (4) to be arranged in the intermediate opening configuration.

14. Machine (1) according to the preceding claim, wherein the second magnet (542) rotates by a second predetermined angle, so as to obtain an angular alignment along the valve axis (V) between the first (541) and second (542) magnets such as to allow the pair of programmable magnets (54) to attract each other and arrange the flow adjustment solenoid valve (4) in the complete opening configuration.

15. Machine (1) according to claim 13 or 14, wherein the second magnet (542) rotates by a third predetermined angle, so as to obtain an angular alignment along the valve axis (V) between the first (541) and second (542) magnets such as to allow the pair of programmable magnets (54) to repel each other and arrange the flow adjustment solenoid valve (4) in the closing configuration.

16. Machine (1) according to any one of the preceding claims in combination with claim 3, wherein the piston (44) is at least partially a permanent magnet and wherein the flow adjustment means (5) further comprise a permanent micro-adjustment magnet (542') fixed to and made integral with the first core (43), said permanent micro-adjustment magnet (542') facing the piston (44) so that the polarity of the permanent micro-adjustment magnet (542') faces and coincides with the polarity of the piston (44) to generate a rejecting force on the piston (44), wherein said piston (44), moving away from the first core (43) due to the rejecting force, results in an increase in the force with which the shutter (40) blocks the passage of the infusion fluid.

## Patentansprüche

1. Maschine (1) zur Ausgabe eines Infusionsgetränks, wie Kaffee, Kamille, Tee oder Kräutertee, umfassend:
- eine Pumpengruppe (2), wie eine Kreiselpumpe, die geeignet ist, eine Infusionsflüssigkeit zu fördern;
- eine Ausgabegruppe (3), die stromabwärts der Pumpengruppe (2) angeordnet ist und fluidisch mit dieser verbunden ist, wobei die Ausgabegruppe (3) ein Filterelement umfasst, das geeignet ist, eine von der Infusionsflüssigkeit benetzbare organische Substanz aufzunehmen, um das entsprechende auszugebende Infusionsgetränk zu erhalten;
- ein Flusseinstellung-Solenoidventil (4), das sich entlang einer Ventilachse (V) erstreckt und fluidisch zwischen der Pumpengruppe (2) und der Ausgabegruppe (3) angeordnet ist, um den Durchfluss der Infusionsflüssigkeit zu steuern, wobei das Flusseinstellung-Solenoidventil (4) einen Schieber (40) umfasst, der entlang der Ventilachse (V) beweglich ist und der in einer Schließstellung, in der die Pumpengruppe (2) inaktiv ist und der Schieber (40) den Durchfluss der Infusionsflüssigkeit von der Pumpengruppe (2) zu der Ausgabegruppe (3) blockiert, und in einer vollständigen Öffnungsstellung, in der die Pumpengruppe in Betrieb ist und der Schieber (40) vollständig angehoben ist, konfigurierbar ist, sodass der Infusionsflüssigkeit zu erlauben, die Ausgabegruppe zu erreichen,
**dadurch gekennzeichnet, dass** das Flusseinstellung-Solenoidventil (4) Flusseinstellungsmittel (5) umfasst, die geeignet sind, den Durchfluss der Infusionsflüssigkeit einzustellen, und wobei das Flusseinstellung-Solenoidventil (4) zwischen der Schließstellung und der vollständigen Öffnungsstellung in einer Zwischenöffnungsstellung angeordnet ist, in der die Pumpengruppe (2) in Betrieb ist und die Flusseinstellungsmittel (5) das teilweise Anheben des Schiebers (40) ermöglichen, um den Durchfluss der Infusionsflüssigkeit von der Pumpengruppe zu der Ausgabegruppe teilweise zu begrenzen.

2. Maschine (1) nach dem vorhergehenden Anspruch, wobei das Flusseinstellung-Solenoidventil (4) einen Ventilkörper (41) umfasst, der eine Eintrittskammer (410) begrenzt, die mit der Pumpengruppe (2) verbindbar ist, eine Flussreinstellungskammer (413), in der der Schieber (40) verschiebbar ist, und eine Austrittskammer (415), die mit der Ausgabegruppe (3) verbindbar ist, wobei die Eintrittskammer (410), Flusseinstellungskammer (413) und Austrittskammer (415) fluidisch in Reihe angeordnet sind.

3. Maschine nach dem vorhergehenden Anspruch, wobei das Flusseinstellung-Solenoidventil (4) ferner umfasst:
- ein rohrförmiges Element (42), das mit dem Ventilkörper (41) in Eingriff steht;
- einen ersten Kern (43), der operativ mit dem rohrförmigen Element (42) verbunden ist;
- einen Kolben (44) umfassend den Schieber (40) umfasst und der sich zwischen einem Kopfende (44') und einem Schlussende (44") erstreckt, wobei der Kolben (44) mindestens teilweise innerhalb des rohrförmigen Elements (42) aufgenommen wird, sodass er durch das rohrförmige Element in der Verschiebung zwischen der Schließstellung und der vollständigen Öffnungsstellung geführt wird.

4. Maschine (1) nach dem vorhergehenden Anspruch, wobei:
- der Ventilkörper (41) eine ringförmige Wand (410') umfasst, die die Flusseinstellungskammer (413) begrenzt;
- das rohrförmige Element (42) einen ringförmigen Abschnitt (420) umfasst, der mit der ringförmigen Wand (410') formschlüssig und/oder durch Interferenzkupplung, beispielsweise mittels einer Schraubverbindung, in Eingriff steht, wobei der ringförmige Abschnitt (420) axial durch einen angrenzenden Unterschnitt (421) begrenzt wird, der einen Absatz bildet;
- ein Flansch (446), der radial nach außen vorsteht, an dem Kopfende (44') ausgebildet ist,
und wobei die Flusseinstellungsmittel (5) ein erstes elastisches Element (55) umfassen, das außen auf den Kolben (44) angebracht wird und zwischen dem angrenzenden Unterschnitt (421) und dem Flansch (446) angeordnet ist, sodass die Elastizität des ersten elastischen Elements (55) dem Flusseinstellung-Solenoidventil (4) erlaubt, in die Zwischenöffnungsstellung positioniert zu werden.

5. Maschine (1) nach dem vorhergehenden Anspruch, wobei das erste elastische Element (55) eine Schraubenfeder ist, die mit Belastungen zwischen 250 und 950 g wirkt.

6. Maschine (1) nach einem der Ansprüche 2 bis 5, wobei die Flusseinstellungsmittel (5) ferner einen ersten Einsatz (51) umfassen, der lösbar in die Eintrittskammer (410) in Eingriff gebracht werden kann und der eine erste Durchgangsbohrung (510) für den Durchfluss der Infusionsflüssigkeit aufweist, wobei die erste Durchgangsbohrung (510) in der Schließstellung durch den Schieber (40) verschlossen ist und durch einen ersten Bohrungsdurchmesser (D1) definiert wird, der geeignet ist, dem Durchfluss der Infusionsflüssigkeit zu erlauben, den Schieber anzuheben und ihn von der Schließstellung in die Zwischenöffnungsstellung zu bewegen.

7. Maschine (1) nach dem vorhergehenden Anspruch, wobei die Eintrittskammer (410) eine Zugangsöffnung (412b) aufweist, die nach außen des Ventilkörpers (41) zugewandt ist und geeignet ist, der axialen Position des ersten Einsatzes (51) zu erlauben, entlang der Eintrittskammer (410) eingestellt zu werden und/oder dem ersten Einsatz (51) zu erlauben, ausgetauscht zu werden, ohne das Flusseinstellung-Solenoidventil (4) auszubauen.

8. Maschine (1) nach dem vorhergehenden Anspruch, wobei das Flusseinstellung-Solenoidventil (4) eine Kappe (6) zum lösbaren Verschluss der Zugangsöffnung (412b) umfasst.

9. Maschine (1) nach einem der Ansprüche 2 bis 8, wobei die Eintrittskammer (410) durch ein erstes Rohr (411), das sich entlang einer Flüssigkeitseintrittsachse (I) erstreckt, und durch ein zweites Rohr (412), das sich entlang der Ventilachse (V) erstreckt und der Flüssigkeitseintrittsachse (I) einfallend ist, definiert wird, wobei sich die Ventilachse (V) vorzugsweise orthogonal zu der Flüssigkeitseintrittsachse (I) erstreckt, sodass eine im Wesentlichen "T"- oder "L"-förmige Eintrittskammer (410) gebildet wird, wobei
- das erste Rohr (411) eine Eintrittsöffnung (411') aufweist, die geeignet ist, die Infusionsflüssigkeit aufzunehmen, die von der Pumpengruppe (2) gefördert wird und eine Verbindungsöffnung (411") zur Verbindung mit dem zweiten Rohr (412), und
- das zweite Rohr (412) sich zwischen einem ersten Ende (412') und einem dem ersten gegenüberliegenden zweiten Ende (412") erstreckt, wobei das zweite Ende (412") eine Öffnung (412a) aufweist, die der Flusseinstellungskammer (413) zugewandt ist und geeignet ist, in der Schließstellung durch den Schieber (40) blockiert zu werden.

10. Maschine (1) nach einem der Ansprüche 6 bis 8 in Kombination mit Anspruch 9, wobei die Zugangsöffnung (412b) das erste Ende (412') axial begrenzt und der erste Einsatz (51) an dem zweiten Ende (412"), insbesondere an der Öffnung (412a), positioniert ist.

11. Maschine nach einem der vorhergehenden Ansprüche wenn in Abhängigkeit von Anspruch 9, wobei die Flusseinstellungsmittel (5) ferner einen zweiten Einsatz (52) umfassen, der lösbar in die Eintrittskammer (410) in Eingriff gebracht werden kann, sodass er ausgetauscht werden kann, ohne dass Flusseinstellung-Solenoidventils (4) auszubauen, wobei der zweite Einsatz (52) vorzugsweise in dem ersten Rohr (411) in der Nähe der Verbindungsöffnung (411") angeordnet ist und wobei der zweite Einsatz (52) eine zweite Durchgangsbohrung (520) zum Durchfluss der Infusionsflüssigkeit aufweist, wobei die zweite Durchgangsbohrung (520) durch einen Durchmesser (D2) definiert wird, der dem Druck und der Geschwindigkeit der Infusionsflüssigkeit ermöglicht, eingestellt zu werden.

12. Maschine (1) nach einem der vorhergehenden Ansprüche wenn in Abhängigkeit von Anspruch 4, wobei die Flusseinstellungsmittel (5) ferner ein oberes Flusseinstellungselement (53), wie z. B. einen Hebel oder einen Griff, umfassen der mit dem ersten Kern (43) einstückig ausgebildet ist, sodass durch Betätigung des oberen Flusseinstellungselements (53) der erste Kern (43) entlang der Ventilachse (V) bewegt wird und das rohrförmige Element (42) bewegt, dessen ringförmiger Abschnitt (420) sich tiefer mit der ringförmigen Wand (410') des Ventilkörpers (41) in Eingriff steht, wodurch eine Erhöhung der Vorspannung des ersten elastischen Elements (55) bewirkt wird.

13. Maschine (1) nach einem der vorhergehenden Ansprüche wenn in Abhängigkeit von Anspruch 3, wobei die Flusseinstellungsmittel (5) ein Paar programmierbarer Magnete (54) umfassen, wobei ein erster Magnet (541) des Paars von Magneten (54) an dem Schlussende (44") befestigt wird und ein zweiter Magnet (542) des Paars von Magneten (54) an dem ersten Kern (43) befestigt wird und einstückig mit diesem ausgebildet ist, sodass er dem ersten Magneten (541) zugewandt ist, wobei das Flusseinstellung-Solenoidventil (4) von einem Elektromotor betrieben wird, der die Drehung des ersten Kerns (43) um die Ventilachse (V) steuert, wobei die Drehung des ersten Kerns (43) auf den zweiten Magneten (542) übertragen wird, der sich um einen ersten vorgegebenen Winkel dreht, um eine Winkelstellung entlang der Ventilachse (V) zwischen dem ersten (541) und dem zweiten (542) Magneten zu erreichen, sodass dem Paar von programmierbaren Magneten (54) erlaubt wird als eine Feder zu wirken und somit dem Flusseinstellung-Solenoidventil (4) in die Zwischenöffnungsstellung angeordnet zu werden.

14. Maschine (1) nach dem vorhergehenden Anspruch, wobei sich der zweite Magnet (542) um einen zweiten vorgegebenen Winkel dreht, um eine Winkelstellung entlang der Ventilachse (V) zwischen dem ersten (541) und dem zweiten (542) Magneten zu erreichen, sodass dem Paar von programmierbaren Magneten (54) erlaubt wird, einander anzuziehen und das Flusseinstellung-Solenoidventil (4) in die vollständige Öffnungsstellung anzuordnen.

15. Maschine (1) nach Anspruch 13 oder 14, wobei sich der zweite Magnet (542) um einen dritten vorgegebenen Winkel dreht, um eine Winkelstellung entlang der Ventilachse (V) zwischen dem ersten (541) und dem zweiten (542) Magneten zu erreichen, sodass dem Paar von programmierbaren Magneten (54) erlaubt wird, sich gegenseitig abzustoßen und das Flusseinstellung-Solenoidventil (4) in die Schließstellung anzuordnen.

16. Maschine (1) nach einem der vorhergehenden Ansprüche in Kombination mit Anspruch 3, wobei der Kolben (44) mindestens teilweise ein Dauermagnet ist und wobei die Flusseinstellungsmittel (5) ferner einen Permanentmikroeinstellungsmagneten (542') umfassen, der an dem ersten Kern (43) befestigt wird und einstückig mit diesem ausgebildet ist, wobei der Permanentmikroeinstellungsmagnet (542') dem Kolben (44) zugewandt ist, sodass die Polarität des Permanentmikroeinstellungsmagneten (542') der Polarität des Kolbens (44) trägt und mit dieser übereinstimmt, um eine Abstoßungskraft auf den Kolben (44) zu erzeugen, wobei der Kolben (44), der sich aufgrund der Abstoßungskraft von dem ersten Kern (43) weg bewegt, zu einer Erhöhung der Kraft führt, mit der der Schieber (40) den Durchfluss der Infusionsflüssigkeit blockiert.

## Revendications

1. Machine (1) de distribution d'une boisson infusée, telle que du café, de la camomille, du thé ou une tisane, comprenant :
- un groupe de pompe (2), tel qu'une pompe rotative, apte à pomper un fluide d'infusion ;
- un groupe de distribution (3) disposé en aval du groupe de pompe (2) et connecté fluidiquement à celui-ci, ledit groupe de distribution (3) comprenant un élément de filtration apte à contenir une substance organique mouillable par le fluide d'infusion afin d'obtenir la boisson infusée correspondante à distribuer ;
- une électrovanne de régulation de débit (4) s'étendant selon un axe de vanne (V) et interposée fluidiquement entre le groupe de pompe (2) et le groupe de distribution (3) de manière à réguler le débit du fluide d'infusion, ladite électrovanne de régulation de débit (4) comprenant un obturateur (40) mobile le long de l'axe de vanne (V) et configurable dans une configuration de fermeture, dans laquelle le groupe de pompe (2) est inactif et l'obturateur (40) bloque le passage du fluide d'infusion du groupe de pompe (2) au groupe de distribution (3), et dans une configuration d'ouverture complète, dans laquelle le groupe de pompe fonctionne et l'obturateur (40) est complètement levé de manière à permettre au fluide d'infusion d'atteindre le groupe de distribution,
**caractérisée en ce que** l'électrovanne de régulation de débit (4) comprend des moyens de régulation de débit (5) aptes à réguler le passage du fluide d'infusion, et **en ce que**, entre la configuration de fermeture et la configuration d'ouverture complète, l'électrovanne de régulation de débit (4) est disposée dans une configuration d'ouverture intermédiaire, dans laquelle le groupe de pompe (2) fonctionne et les moyens de régulation de débit (5) permettent le levage partiel de l'obturateur (40) de manière à partiellement doser le débit du fluide d'infusion du groupe de pompe au groupe de distribution.

2. Machine (1) selon la revendication précédente, dans laquelle l'électrovanne de régulation de débit (4) comprend un corps de vanne (41) délimitant une chambre d'entrée (410) connectable au groupe de pompe (2), une chambre de régulation de débit (413) dans laquelle l'obturateur (40) est translatable, et une chambre de sortie (415) connectable au groupe de distribution (3), lesdites chambres d'entrée (410), de régulation de débit (413) et de sortie (415) étant agencées en série fluidique.

3. Machine selon la revendication précédente, dans laquelle l'électrovanne de régulation de débit (4) comprend en outre :
- un élément tubulaire (42) engagé avec le corps de vanne (41) ;
- un premier noyau (43) relié fonctionnellement à l'élément tubulaire (42) ;
- un piston (44) comprenant l'obturateur (40) et s'étendant entre une extrémité de tête (44') et une extrémité de queue (44"), ledit piston (44) étant au moins partiellement logé à l'intérieur de l'élément tubulaire (42), de manière à être guidé par l'élément tubulaire dans la translation entre la configuration de fermeture et la configuration d'ouverture complète.

4. Machine (1) selon la revendication précédente, dans laquelle :
- le corps de vanne (41) comprend une paroi annulaire (410') délimitant la chambre de régulation de débit (413) ;
- l'élément tubulaire (42) comprend une portion annulaire (420) engagée avec la paroi annulaire (410') par ajustement de forme et/ou par interférence, par exemple au moyen d'un raccord fileté, ladite portion annulaire (420) étant axialement délimitée par un évidement d'arrêt (421) formant un épaulement ;
- une bride (446) s'étendant radialement vers l'extérieur est réalisée à l'extrémité de tête (44'),
et dans laquelle les moyens de régulation de débit (5) comprennent un premier élément élastique (55) monté extérieurement sur le piston (44) et positionné entre l'évidement d'arrêt (421) et la bride (446), de sorte que la résilience du premier élément élastique (55) permet de disposer l'électrovanne de régulation de débit (4) dans la configuration d'ouverture intermédiaire.

5. Machine (1) selon la revendication précédente, dans laquelle le premier élément élastique (55) est un ressort hélicoïdal agissant avec des charges comprises entre 250 et 950 g.

6. Machine (1) selon l'une quelconque des revendications 2 à 5, dans laquelle les moyens de régulation de débit (5) comprennent en outre un premier insert (51) apte à être engagé de manière amovible à l'intérieur de la chambre d'entrée (410) et comportant un premier orifice traversant (510) pour le passage du fluide d'infusion, ledit premier orifice traversant (510) étant obturé par l'obturateur (40) dans la configuration de fermeture et étant défini par un premier diamètre de trou (D1) apte à permettre au fluide d'infusion de soulever l'obturateur et de le déplacer de la configuration de fermeture à la configuration d'ouverture intermédiaire.

7. Machine (1) selon la revendication précédente, dans laquelle la chambre d'entrée (410) comprend une ouverture d'accès (412b) orientée vers l'extérieur du corps de vanne (41) et apte à permettre l'ajustement de la position axiale du premier insert (51) le long de la chambre d'entrée (410) et/ou le remplacement du premier insert (51) sans démonter l'électrovanne de régulation de débit (4).

8. Machine (1) selon la revendication précédente, dans laquelle l'électrovanne de régulation de débit (4) comprend un capuchon (6) pour fermer de manière amovible l'ouverture d'accès (412b).

9. Machine (1) selon l'une quelconque des revendications 2 à 8, dans laquelle la chambre d'entrée (410) est définie par un premier conduit (411) s'étendant selon un axe d'entrée de fluide (I), et par un second conduit (412) s'étendant selon l'axe de vanne (V) incident à l'axe d'entrée de fluide (I), de préférence l'axe de vanne (V) est orthogonal à l'axe d'entrée de fluide (I) de manière à former une chambre d'entrée (410) sensiblement en forme de « T » ou de « L », dans laquelle :
- le premier conduit (411) présente une embouchure d'entrée (411') apte à recevoir le fluide d'infusion pompé par le groupe de pompe (2), et une embouchure de raccordement (411") pour la connexion avec le second conduit (412), et
- le second conduit (412) s'étend entre une première extrémité (412') et une seconde extrémité (412") opposée à la première, ladite seconde extrémité (412") présentant une ouverture (412a) orientée vers la chambre de régulation de débit (413) et apte à être obturée par l'obturateur (40) dans la configuration de fermeture.

10. Machine (1) selon l'une quelconque des revendications 6 à 8 combinée avec la revendication 9, dans laquelle l'ouverture d'accès (412b) délimite axialement la première extrémité (412'), et le premier insert (51) est positionné à la seconde extrémité (412"), en particulier au niveau de l'ouverture (412a).

11. Machine selon l'une quelconque des revendications précédentes dépendant de la revendication 9, dans laquelle les moyens de régulation de débit (5) comprennent en outre un second insert (52) apte à être engagé de manière amovible à l'intérieur de la chambre d'entrée (410) de façon à pouvoir être remplacé sans démonter l'électrovanne de régulation de débit (4), de préférence le second insert (52) est disposé à l'intérieur du premier conduit (411) à proximité de l'embouchure de raccordement (411"), ledit second insert (52) comportant un second orifice traversant (520) pour le passage du fluide d'infusion, ledit second orifice traversant (520) étant défini par un diamètre (D2) permettant de réguler la pression et la vitesse du fluide d'infusion.

12. Machine (1) selon l'une quelconque des revendications précédentes dépendant de la revendication 4, dans laquelle les moyens de régulation de débit (5) comprennent en outre un organe supérieur de régulation de débit (53), tel qu'un levier ou une poignée, solidaire du premier noyau (43) de sorte qu'en actionnant l'organe supérieur de régulation de débit (53), le premier noyau (43) se déplace le long de l'axe de vanne (V) et déplace l'élément tubulaire (42), dont la portion annulaire (420) s'engage plus profondément avec la paroi annulaire (410') du corps de vanne (41), provoquant une augmentation de la pré-compression du premier élément élastique (55).

13. Machine (1) selon l'une quelconque des revendications précédentes dépendant de la revendication 3, dans laquelle les moyens de régulation de débit (5) comprennent une paire d'aimants programmables (54), où un premier aimant (541) de ladite paire d'aimants programmables (54) est fixé à l'extrémité de queue (44"), et un second aimant (542) de ladite paire d'aimants programmables (54) est fixé et rendu solidaire du premier noyau (43) de manière à faire face au premier aimant (541), l'électrovanne de régulation de débit (4) étant alimentée par un moteur électrique commandant la rotation du premier noyau (43) autour de l'axe de vanne (V), la rotation du premier noyau (43) étant transmise au second aimant (542), qui tourne selon un premier angle prédéterminé, de manière à obtenir un alignement angulaire le long de l'axe de vanne (V) entre les premier (541) et second (542) aimants tel que la paire d'aimants programmables (54) peut se comporter comme un ressort et permette ainsi de disposer l'électrovanne de régulation de débit (4) dans la configuration d'ouverture intermédiaire.

14. Machine (1) selon la revendication précédente, dans laquelle le second aimant (542) tourne selon un second angle prédéterminé, de manière à obtenir un alignement angulaire le long de l'axe de vanne (V) entre les premier (541) et second (542) aimants tel que la paire d'aimants programmables (54) s'attire mutuellement et dispose l'électrovanne de régulation de débit (4) dans la configuration d'ouverture complète.

15. Machine (1) selon la revendication 13 ou 14, dans laquelle le second aimant (542) tourne selon un troisième angle prédéterminé, de manière à obtenir un alignement angulaire le long de l'axe de vanne (V) entre les premier (541) et second (542) aimants tel que la paire d'aimants programmables (54) se repousse mutuellement et dispose l'électrovanne de régulation de débit (4) dans la configuration de fermeture.

16. Machine (1) selon l'une quelconque des revendications précédentes combinée avec la revendication 3, dans laquelle le piston (44) est au moins partiellement un aimant permanent et dans laquelle les moyens de régulation de débit (5) comprennent en outre un aimant permanent de micro-réglage (542') fixé et rendu solidaire du premier noyau (43), ledit aimant permanent de micro-réglage (542') étant disposé en regard du piston (44) de sorte que la polarité de l'aimant permanent de micro-réglage (542') fasse face et coïncide avec la polarité du piston (44) pour générer une force de répulsion sur le piston (44), ledit piston (44), en s'éloignant du premier noyau (43) en raison de la force de répulsion, entraînant une augmentation de la force avec laquelle l'obturateur (40) bloque le passage du fluide d'infusion.
